# EUROPEAN PATENT SPECIFICATION

(11) **EP 3 628 540 B1**
(45) Date of publication and mention of the grant of the patent: **16.03.2022**
(21) Application number: 18306250.4
(22) Date of filing: 25.09.2018
(51) Int. Cl.: B60R 11/04, B60S 1/08

(54) **WINDSHIELD SENSING DEVICE**
WINDSCHUTZSCHEIBENERFASSUNGSVORRICHTUNG
DISPOSITIF DE DÉTECTION DE PARE-BRISE

(43) Date of publication of application: 01.04.2020
(73) Proprietor: MEAS France, 31027 Toulouse Cedex 3 (FR)
(72) Inventor: LEGER, Vincent, 31200 Toulouse (FR); VIDAL, Yannick, 31650 Saint Orens De Gameville (FR)
(74) Representative: Grünecker Patent- und Rechtsanwälte PartG mbB

(56) References cited:
- EP-A2- 1 097 848
- WO-A1-2006/029901
- DE-A1-102012 017 942
- US-A1- 2004 232 773

## Description

The present invention relates to a windshield sensing device, in particular for motor vehicles.

Temperature sensors, humidity sensors, optical sensors or a combination thereof are known to be used in windshield sensing devices for the purpose of automatically adapting the heating, ventilation, and air conditioning (so called HVAC) or for automatically switching on the wiper, as shown in EP 1 907 848 A2, WO 2006/029901 A1 and DE 10 2012 017942 .

As an example, a windshield temperature sensing device is commonly used for preventing fogging conditions. Windshield mounted temperature and/or humidity sensors can further be combined with light sensors or solar sensors.

For allowing a precise and reliable monitoring of the temperature and/or the moisture, the sensor of the sensing device has to be kept in constant contact with the surface of the windshield surface during the whole lifetime of the vehicle, and thus withstand mechanical shock and vibration.

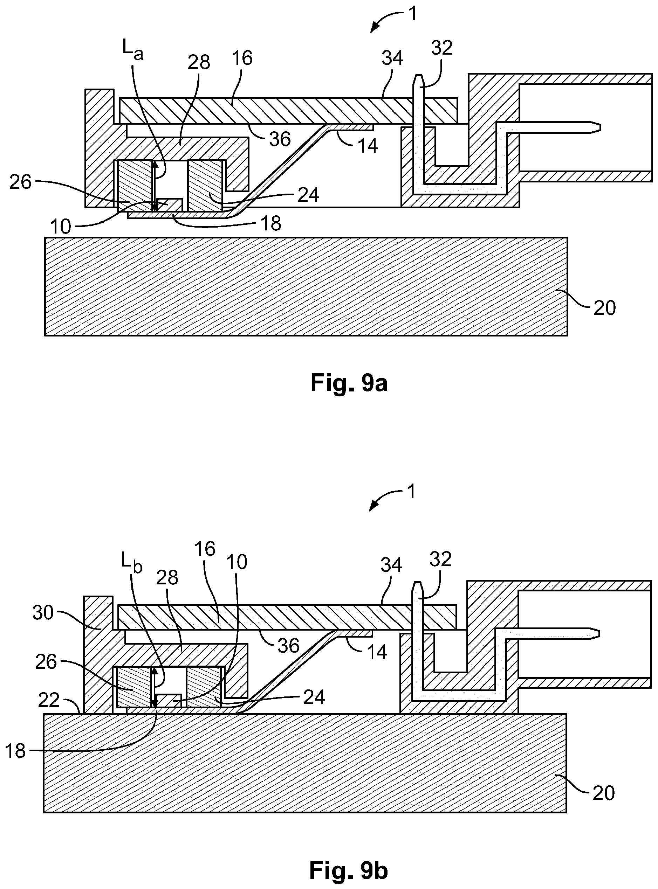

A conventional temperature sensing device 1 is shown in Figures 9a and 9b. As illustrated by the cross-sectional view of Figure 9a, a thermistor 10 can be soldered on a flexible polyimide film 12 such that one end 14 of the polyimide film 12 is then soldered to a printed circuit board (PCB) 16 and another end 18, on which the thermistor 10 is welded, is maintained on the windshield surface 20. The end 18 provided with the thermistor 10 is usually pressed against the windshield surface 22 by means of foam elements 24, 26, such as thermal foam, arranged on either side of the thermistor 10. Hence, as illustrated in Figure 9b, when the device 1 is attached to the windshield surface 20, the foam elements 24, 26 are compressed such that their respective length L_{b} is smaller than their respective initial length Lₐ represented in Figure 9a. These foams elements 24, 26 are positioned between the polyimide film 12 and a portion 28 of the housing 30 of the sensing device 1. Electrical pin contacts 32 of an associated connector extend out of the PCB 16 and are then welded to the PCB 16 on a surface 34 opposite to the surface 36 provided with the polyimide film 12.

However, the foam used for fixing the polyimide film with the thermistor on the windshield is subject to ageing, degradation and/or mechanical stress. Furthermore, the soldering of the thermistor on the polyimide film, the soldering of the sensing device to the PCB and the soldering of the connector pin contact to the PCB imply to realize the soldering process in successive steps.

Document US2008/016945 A1 discloses a sensing device for a windscreen wherein a printed circuit board (PCB) is designed as a flexible sheet of e.g. plastic material, wherein the sheet is bendable and supporting a sensor that is attached to the PCB by e.g. gluing.

Hence, it is an object of the present invention to simplify the assembly and the soldering process of a windshield sensing device while improving the mechanical contact and the retention of the sensing device on the windshield, thereby improving the accuracy and robustness of the sensing device.

The object of the present invention is solved by the subject matter of the independent claims.

In particular, a sensing device according to the present invention is defined by the features of claim 1.

With the present invention, the contact between the transducer and the windshield surface is ensured without requiring any additional element between the sensing element and the attachment member, such as foam, like in the prior art. Indeed, because the foams are subject to ageing and material degradation, it is advantageous to provide a sensing device free of foam for increasing the lifetime of the sensing device. Another benefit of the invention is that the pressing means is configured for applying a pressure on or over the transducer itself, instead of applying a pressure on the surrounding of a transducer welded on the sensing element, as known in the prior art. Thus, the quality of the contact can be improved. This allows increasing the accuracy and the measurement's reliability, such as the measurement of the windshield's temperature. Advantageous embodiments of the present invention are the subject matter of the dependent claims.

The sensing device can be further improved according to various advantageous embodiments.

According to an embodiment, the pressing means may comprise at least one first portion attached to the attachment member and at least one second portion configured to be in contact with the transducer when the attachment member is attached to the surface of the windshield, such that when the attachment member of the sensing device is attached to the surface of the windshield, the at least one second portion is closer to the surface of the windshield than the at least one first portion according to a direction normal to the windshield surface. Hence, the pressing means is designed so as to be provided with structural features allowing a portion of the pressing means, the said second portion, to apply a pressure on or over the transducer without the need for further components, e.g. foams, thus simplifying the structure of the sensing device.

According to an embodiment, the pressing means may be tab-shaped, such that a first portion of the tab's length may be attached to the attachment member, and a second portion of the tab's length may terminate in a free extremity such that the pressing means may be able to pivot at the first portion around an axis perpendicular to the length of the tab and can act as a spring arm for applying a pressure on or over the transducer when the attachment member is attached to the windshield surface. Hence, the manufacturing of the pressing means can be simplified thanks to its tab's shape. Furthermore, the resilience of the spring arm enables the pressing means to apply a pressure on or over the transducer.

According to an embodiment, a surface of the second portion of the pressing means facing towards the windshield surface, when the attachment member is attached to the windshield surface, may be provided with a protrusion, such that when the attachment member is attached to the windshield surface, the protrusion may extend from the surface of the second portion towards the windshield surface and may apply a pressure on or over the transducer. The quality of the contact can then be further improved by the protrusion of the pressing means, as the protrusion allows pressing the transducer closer to the windshield surface, when the sensing device is fixed to the windshield surface.

According to an embodiment, the tab of the pressing means may comprise a hollowed portion such that the pressing means is U-shaped, V-shaped, arc-shaped or horseshoe-shaped, and such that at least one free end of the U-shaped, V-shaped, arc-shaped or horseshoe-shaped pressing means is fixed to the attachment member, and the central section of the U-shaped, V-shaped, arc-shaped or horseshoe-shaped pressing means may be configured to apply a pressure on or over the transducer when the attachment member is attached to the windshield surface. Hence, the pressing means is adapted for providing to the sensing device a section able to apply a pressure on or over the transducer when the attachment member is attached to the windshield surface.

According to an embodiment, the attachment member may comprise at least one through-hole such that the axis of the at least one through-hole is normal to the surface of the windshield surface when the attachment member is attached to the windshield surface, and such that the sensing element may be configured to be positioned at least partially through the through-hole of the attachment member and at least partially through the hollowed portion of the pressing means.

Therefore, the design of the attachment member can be optimized such that the sensing element can be easily positioned through the hole and hollowed portion.

According to an embodiment, the attachment member may be configured for receiving at least one printed circuit board (PCB) and one or more electrical contact pin. Therefore, the attachment member is adapted for receiving electronic and electrical components of the sensing device.

According to an embodiment, the at least one printed circuit board (PCB) may comprise at least one through-hole whereof the axis can merge with the axis of the at least one through-hole of the attachment member when the PCB is received by the attachment member. Hence, the PCB and the attachment member are designed so that projections, for example, can pass through both holes.

According to an embodiment, the sensing element may be configured to be positioned at least partially through the through-hole of the attachment member and through the through-hole of the PCB, such that one extremity of the sensing element may extend out of the PCB when the sensing device is assembled. Hence, the one extremity of the sensing element can be welded on the PCB, which allows simplifying the manufacturing of the sensing device.

According to an embodiment, one extremity of the one or more electrical contact pin and the one extremity of the sensing element extending out of the PCB when the sensing device is assembled may extend in the same direction from the through-hole of the PCB. Hence, the welding operations of both the sensing element and one or more pin contacts can be realized in one step, on the same surface of the PCB, which allows simplifying the manufacturing of the sensing device and reducing the manufacturing time as well.

According to an embodiment, the pressing means may be integrally formed with the attachment member such that the pressing means and the attachment member may be one-piece. Hence, the pressing means and the attachment member can be realized in one single step, without using any fasteners or bonding process, thus reducing both the manufacturing time and the number of elements, *i.e.* reducing the cost manufacturing and simplifying the process.

According to an embodiment, the sensing element may be one of a temperature sensor, a humidity sensor, an optical sensor, a pressure sensor and a sound sensor, which comprises a transducer embedded in a flexible film. The flexible film, in addition of improving the stability of the transducer, allows bending the sensing element and protecting the transducer from the environment.

According to a variant, the sensing element may be a Negative Temperature Coefficient (NTC) thermistor embedded in a flexible polyimide film. NTC thermistors are known for being highly sensitive thermal transducers that are adapted to response quickly to rapid temperature change. Thus, NTC thermistors are particularly adapted for automotive application, such as windshield application.

Furthermore, a method for attaching a sensing device on a windshield surface is defined by the features of claim 14 wherein the sensing device comprises an attachment member being a first housing of the sensing device and comprising a pressing means; and a sensing element comprising a transducer; comprises a step of attaching the attachment member to the surface of said windshield so that the pressing means applies a pressure on or over the transducer of the sensing element, so as to keep the transducer pressed against the surface of the windshield.

Hence, the method of the present invention allows placing the pressing means such that the pressing means applies a pressure on or over the transducer itself, instead of applying a pressure on the surrounding of a transducer welded on the sensing element, as known in the prior art. Therefore, the quality of the contact can be improved. This allows increasing the accuracy and the measurement's reliability, such as the measurement of the windshield's temperature.

The method for attaching a sensing device on a windshield surface can be further improved according to various advantageous embodiments.

According to an embodiment, the method for attaching a sensing device on a windshield surface, wherein the attachment member is able to receive at least one Printed Circuit Board (PCB) and at least one electrical contact pin, may further comprise the operations of: e1) soldering one extremity of the sensing element to the PCB; and e2) soldering the at least one electrical contact pin to the PCB; such that the operations e1) and e2) may be realized at the same step. Therefore, because the welding of both the sensing element and one or more pin contacts can be realized simultaneously at one same step, the method allows simplifying the manufacturing of the sensing device and reducing the manufacturing time as well.

According to an embodiment, the sensing device may comprise a housing, the attachment member may comprise a pressing means, the sensing element may comprise a transducer; and the method may comprise the step of: a) assembling the at least one electrical contact pin to the attachment member; b) accommodating the PCB in the attachment member such that one extremity of the at least one electrical contact pin extends out of a corresponding hole of the PCB; c) bending the sensing element in a manner to form an angle, different from a flat angle, between a first portion of the sensing element and a second portion of the sensing element, the second portion comprising the transducer; d) inserting the first portion of the sensing element through a through-hole of the attachment member and through a corresponding hole of the PCB, such that one extremity of the first portion extends out of the PCB's hole in the same direction as the one extremity of the at least one electrical contact pin, and positioning the second portion of the sensing element such that the transducer is placed on, over or under the pressing means; e) welding the one extremity of the first portion of the sensing element and the extremity of the at least one electrical contact pin to the PCB; f) assembling the attachment member to the housing of the sensing device; g) attaching the sensing device to the windshield surface by means of the attachment member such that the transducer of the sensing means is kept pressed against the windshield surface under the pressure applied by the pressing means.

According to a variant, the sensing device of the method may be the sensing device according to the preceding embodiments related to a sensing device for a windshield.

Additional features and advantages will be described with reference to the drawings. In the description, reference is made to the accompanying figures that are meant to illustrate preferred embodiments of the invention. It is understood that such embodiments do not represent the full scope of the invention.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form - individually or in different combinations - solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
Figures 1, 1a and 1b illustrate a cross-sectional view of a sensing device according to a first embodiment of the present invention;
Figure 2 illustrates a top view of a sensing element;
Figure 3 illustrates the sensing device according to a second embodiment of the present invention;
Figure 4 illustrates a schematic view of the sensing element and the pressing means according to the second embodiment of the present invention;
Figure 5 illustrates an exploded view of the sensing device according to the second embodiment of the present invention;
Figure 6 illustrates a variant of the sensing device according to the second embodiment of the present invention;
Figure 7 illustrates the sensing element and an attachment member of a sensing device according to a third embodiment;
Figure 8 illustrates a cross-sectional view of a portion of the sensing device according to the third embodiment;
Figures 9a and 9b illustrate a cross-sectional view of a sensing device according to the prior art.

The present invention will now be described with reference to the attached Figures. Various structures, systems and devices are schematically depicted in the drawings for purposes of explanation only and so as to not obscure the present disclosure with details, which are well known to those skilled in the art. Nevertheless, the attached drawings are included to describe and explain illustrative examples of the present disclosure. The words and phrases used herein should be understood and interpreted to have a meaning consistent with the understanding of those words and phrases by those skilled in the relevant art. No special definition of a term or phrase, i.e., a definition that is different from the ordinary or customary meaning as understood by those skilled in the art, is intended to be implied by consistent usage of the term or phrase herein.

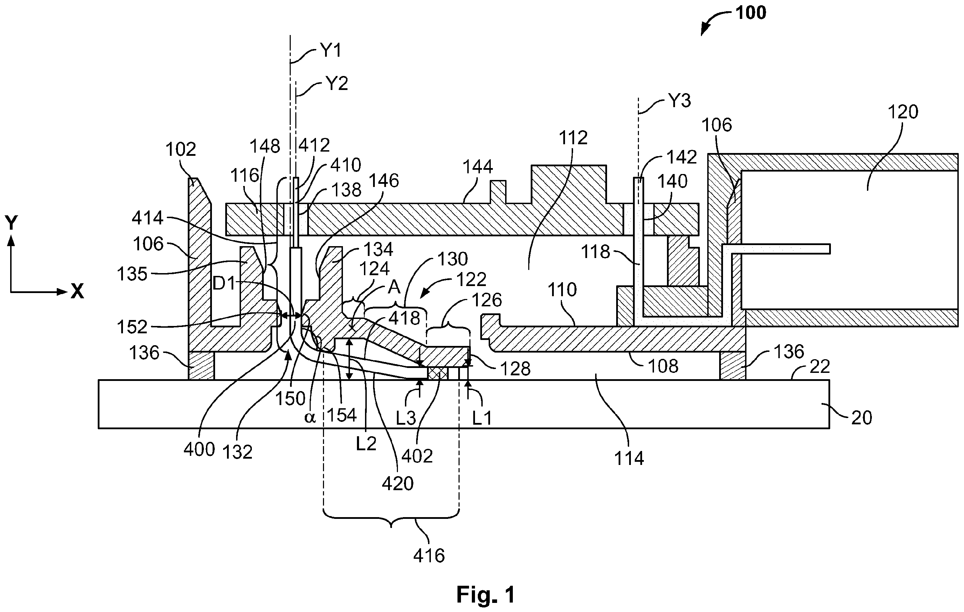

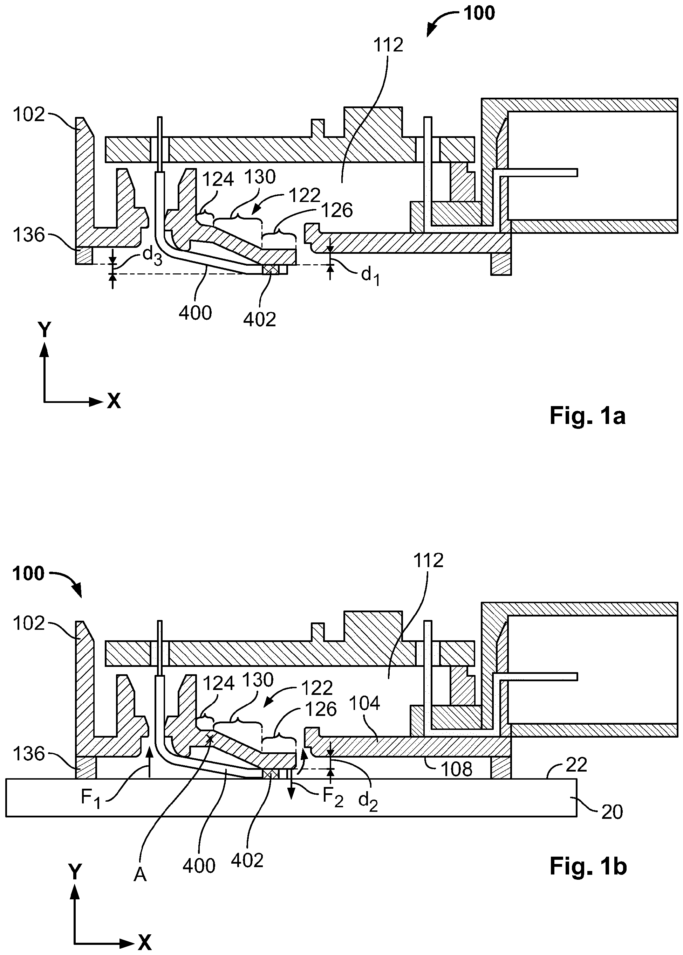

Figure 1 and Figure 1b illustrate a cross-sectional view of a sensing device 100 according to a first embodiment of the present invention. The sensing device 100 is attached to a surface 22 of a windshield 20. The windshield 20 may be the windshield of a motor vehicle, which is not represented in the drawings.

Figure 1a illustrates a cross-sectional view of the sensing device 100 according to the first embodiment wherein the sensing device 100 is not attached to the windshield's surface 22.

The Figures 1a and the Figure 1b allow comparing the attached state to the unattached state of sensing device 100.

The sensing device 100 comprises an attachment member 102 provided with a bottom surface 104 surrounded by sidewalls 106 such that the attachment member 102 is configured to be attached to the windshield 20 by means of the external bottom surface 108, being opposite to the internal bottom surface 110 from which extend the sidewalls 106. The sidewalls 106 extending from the internal bottom surface 110 define the inside 112 of the attachment member 102. The external bottom surface 108 faces outside 114 the attachment member 102.

The inside 112 of the attachment member 102 serves as a housing for a sensing element 400 comprising a transducer 402, a printed circuit board (PCB) 116 and an electrical contact pin 118 of an associated connector 120. In a variant, the attachment member 102 may comprise more than one electrical contact pin 118.

The bottom surface 104 of the attachment member 102 comprises a pressing means 122 being tab-shaped so that a first portion 124 of the pressing means 122 is attached to the attachment member 102, and a second portion 126 of the pressing means 122, opposite to the first portion 124, terminates in a free extremity 128. The first portion 124 and the second portion 126 are connected via a member 130.

As illustrated by the cross-sectional view of Figure 1, the first portion 124, the second portion 126 and the member 130 of the pressing means 122 are longitudinally misaligned so that when the sensing device 100 is attached to the windshield 20, the second portion 126 is closer to the windshield surface 22 than the first portion 124 according to a direction Y normal to the windshield surface 22. Hence, the distance L1 between the second portion 126 and the surface 22 is smaller than the distance L2 between the first portion 124 and the windshield surface 22 according to the direction Y.

The bottom surface 104 of the attachment member 102 further comprises a through-hole 132 whose axis Y1 is normal to the surface 22 of the windshield 20, when the sensing device 100 is attached to the windshield 20 as illustrated in Figure 1. The through-hole 132 is surrounded by two sidewalls 134, 135 extending from the internal bottom surface 110 towards the inside 112 of the attachment member 102 along a direction parallel to the direction Y.

The first portion 124 of the pressing means 122 is connected to the sidewall 134 of the through-hole 132 at the bottom surface 104.

According to the first embodiment, the pressing means 122, made of the first portion 124, the second portion 126 and the member 130, the sidewalls 134 of the through-hole 132, the bottom surface 104 and the sidewalls 106 of the attachment member 102 are made of the same material, in particular in plastic material.

The use of plastic material for the pressing means 122 provides a spring arm which stays resilient and is more stable over the years than foam elements, as used in the prior art and illustrated in Figures 9a-b. Furthermore, the pressing means 122 on the sensing device 100 is adapted to stay robust, even in environment subjected to vibration and shock, as for motor vehicle application.

Advantageously, the pressing means 122, made of the first portion 124, the second portion 126 and the member 130, the sidewalls 134 of the through-hole 132, the bottom surface 104 and the sidewalls 106 of the attachment member 102 are integrally formed such that they are one-piece, in particular manufactured by injection molding. Hence, the pressing means 122 and the attachment member 102 can be realized in one single step, without using any fasteners or bonding process, thus reducing both the manufacturing time and the number of elements, *i.e.* reducing the cost manufacturing and simplifying the process.

Hence, the pressing means 122 is resilient and is able to pivot at the first portion 124 around an axis A perpendicular to the length of the tab 122 and can act as a spring arm for applying a pressure on or over the transducer 402 of the sensing means 400.

As illustrated in Figures 1a and 1b, the resilience of the pressing means 222 allows pivoting the pressing means 222 around the axis A such that the distance d1, d2 between the external bottom surface 108 of the attachment 102 and the surface of second portion 126 in contact with the sensing element 400 is smaller in the attached state than in the non-attached state, i.e. d2 < d1.

The attachment member 102 is attached to the surface 22 of the windshield 20 by means of mounting pads 136 positioned between the external bottom surface 108 of the attachment member 102 and the surface 22 of the windshield 20. Hence, the external bottom surface 108 of the attachment member 102 is facing the surface 22 of the windshield when the sensing device 100 is attached to the windshield 20, as shown in Figures 1 and 1b.

As it can be seen on Figure 1a, the pressing means 222, in the non-attached state, applies a pressure on the sensing element 400 such that the transducer 402 is positioned lower than the mounting pads 136, as annotated by distance d3. In contrast thereto, when the sensing device 100 is attached to the windshield 20, as represented in Figure 1b, the distance d3 is zero because the mounting pads 136 and the transducer 402 are aligned along the surface 22 of the windshield 20. The reduction of the distance d3 between the non-attached state and the attached state results from the rotation of the pressing means 222 around the axis A, the second portion 126 of the pressing means 122 being pushed towards the inside 112 of the attachment means 102 under the force F1 exerted by the windshield's surface 222. Hence, the pressing means 222 acts as a resilient spring arm.

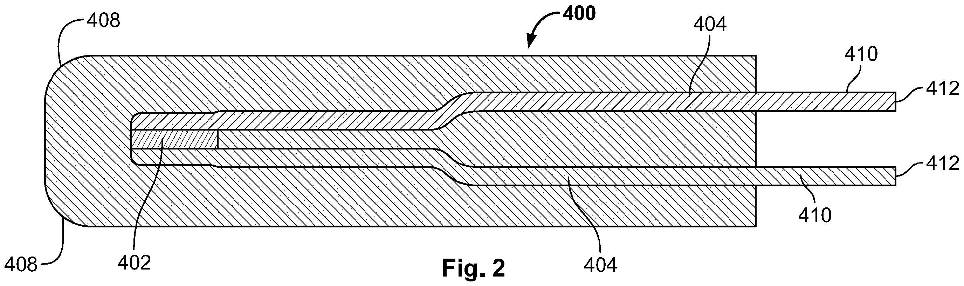

When the sensing device 100 is attached to the windshield's surface 22, as represented in Figure 2b, the second portion 126 of the pressing means 122 applies a force D2 towards to and normal to the surface 22 of the windshield 20. Consequently, the transducer 402 of the sensing element 400 is pressed over the windshield's surface 22.

The sensing element 400 will be further described by making reference to Figure 1 and Figure 2, the Figure 2 illustrating a top view of the sensing element 400 of Figure 1.

The sensing element 400 is made of two wires 404 both connected to the transducer 402. The two wires 404 extend out of the transducer 402 according to a same direction. The transducer 402 is adapted for detecting a physical quantity, such as temperature, and convert the data into an electrical signal. The transducer 402 and the wires 404 are embedded in a flexible film 406 such as a polyimide film. Thus, the sensing element 400 is able to be bent to an angle α without breaking.

According to an advantageous embodiment, the sensing element 400 may be a Negative Temperature Coefficient (NTC) thermistor embedded in a flexible polyimide film.

However, the present application is not limited to NTC thermistor, and, in a variant, the sensing element 400 may also be one of a temperature sensor, a humidity sensor, an optical sensor, a pressure sensor and a sound sensor, which comprises a transducer embedded in a flexible film.

The flexible film 406 has a substantially rectangular shape with rounded corners 408 at one side when viewed from above, as shown in Figure 2. In the first embodiment, the flexible film 406 has a thickness L3 substantially equivalent to the thickness L4 of the transducer 402, the flexible film 406 being a thin film, and of the distance L1 between the second portion 126 of the pressing means 122 and the surface 22 of the windshield 20, when the sensing device 100 is attached to the windshield 20, as illustrated in Figure 1. Actually, as it will be further explained, the thickness L3 of the sensing element 400 is substantially equivalent to the distance L1 for the purpose of avoiding the presence of any gap between the surface 22 and the sensing element 400 and thus, for enhancing the quality of the contact.

Each free extremity 410 of the wires 404, i.e. opposite to the ones connected to the transducer 402, extends out of the flexible film 406 so as to form respective bare wire end 412. The bare wire ends 412 of the sensing element 400 are weldable, to a printed circuit board (PCB), for example.

Referring to the printed circuit board (PCB) 116 illustrated in Figure 1, the PCB 116 comprises a first through-hole 138 having an axis Y2 parallel to the direction Y, and dimensioned for receiving the bare wire end 412 of the sensing element 400.

The PCB 116 further comprises a second through-hole 140 having an axis Y3 parallel to the direction Y, and dimensioned for receiving a free extremity 142 of the electrical contact pin 118 of the associated connection 120.

Referring to the structural elements and features described above, a method for attaching the sensing device 100 on the windshield surface 22 will be further explained in the following with reference to Figures 1 and 2.

The electrical contact pin 118 of the associated connector 120 is fixed to the attachment member 102 so that the free extremity 142 of the electrical contact pin 118 extends towards the inside 112 of the attachment member 102 in a direction parallel to the sidewalls 106 of the attachment member 102, i.e. parallel to the direction Y.

The PCB 116 is accommodated in the housing 112 provided by the attachment member 102 such that the first through-hole 138 is aligned with the through-hole 132 of the attachment member 102, and the second through-hole 140 is aligned with the free extremity 142 of the electrical contact pin 118. Hence, the free extremity 142 of the electrical contact pin 118 can extend out of the second through-hole 140 from a surface 144 of the PCB 116.

The sensing element 400 made of the flexible film 406 is bent so that an angle α is formed between a first portion 414 comprising the bare wire end 412 and a second portion 416 comprising the transducer 402. The Figure 1 being a cross-sectional view, only one of the two bare wire ends 412 represented in Figure 2, is illustrated in Figure 1.

Bent like that, the first portion 414 of the sensing element 400 is inserted from the external bottom surface 108 inside the through-hole 132 of the attachment member 102 such that the bare wire end 412 also passes through the hole 138 of the PCB 116 and extends out of the surface 144 of the PCB 116. Hence, both of the bare wire 412 of the sensing element 400 and the free extremity 142 of the electrical contact pin 118 extend out from the same surface 144 of the PCB 116. Therefore, the operation of soldering the bare wire 412 of the sensing element 400 and the operation of soldering the free extremity 142 of the electrical contact pin 118 can be realized at the same step on the surface 144 of the PCB 116. Thus, in contrast with the process required for the conventional temperature sensing device 1 as shown in Figures 9a-b that needs a first step for welding the end 14 of the polyimide film 12 to the surface 36 of the PCB 16 and a second, distinct, step for welding the electrical contact pin 32 to the surface 34 of the PCB 16, the present invention allows simplifying the manufacturing of the sensing device 100 and reducing the manufacturing time as well.

The second portion 416 of the sensing element 400 is positioned so as to remain outside 114 the attachment 102 and such that one surface 418 of the flexible film 406 surrounding the transducer 402 is in contact with the second portion 126 of the pressing 122. A surface 420 of the flexible film 406, opposite to the surface 418, is positioned and configured to be in contact with the windshield surface 22.

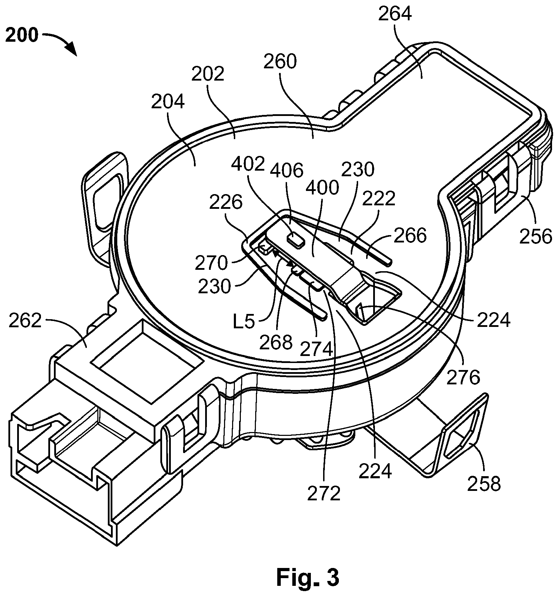

Further parts and housings, which are not represented in Figure 1 but are shown in Figures 3, 4, 5, 6, 7 and 8, can be assembled and/or mounted to the attachment member 102.

The sensing device 100 is then attached to the windshield surface 22 by means of the mounting pads 136.

In a variant, the assembly steps described above may overlap, be skipped, or be carried out in another order.

In the position wherein the sensing device 100 is attached to the windshield surface 22, as illustrated in Figure 1, the pressing means 122, more precisely its second portion 126, applies a pressure on the surface 418 of the flexible film 406 over the transducer 402. This pressure allows keeping the transducer 402 of the sensing element 400 pressed against the windshield surface 22. It is because the transducer 402 is embedded in and protected by the flexible film 406 that it is rendered possible to position the transducer 402 outside 114 the attachment 102 and to apply a pressure over the transducer 402 itself, instead of, as in the prior art, around the transducer 10 as illustrated in Figures 9a-b. Furthermore, in addition of protecting the transducer 402 from the environment, the flexible film 406 encapsulating the transducer 402 also allows improving the stability of the transducer 402.

The transducer 402 embedded in the flexible film 406 is then sandwiched between the pressing means 126 and the windshield surface 22 thanks to the surface contact between the surface 418 of the sensing element 400 and the pressing means 126, and the surface contact between the surface 420 of the sensing element 400 and the windshield surface 22.

Hence, the pressure applied by the pressing means 122 of the attachment member 102 on the transducer 402 allows limiting the presence of air gap between the windshield surface 22 and the transducer 402, thus enhances the efficiency of the sensing element 400.

Moreover, according to the first embodiment, the sidewalls 134, 135 of the through-hole 132 of the attachment member 102 are provided on their inner surfaces 146, 148 with protrusions 150, 152 projecting from each inner surfaces 146, 148 towards the axis Y1 of the through-hole 132. Consequently, the protrusions 150, 152 form inside the through-hole 132 a narrower passage of diameter D1 than the remainder of the through-hole 132 delimited by the sidewalls 134, 135. The passage of diameter D1 is greater than the thickness L3 of the sensing element 400. Hence, the narrow passage of diameter D1 allows guiding and maintaining the first portion 414 of the sensing element 400 between the protrusions 150, 152, while leaving sufficient space for the sensing element 400 to move between the protrusions 150, 152 during vibration or shock events.

Furthermore, according to the first embodiment, the sidewall 134 of the through-hole 132, which is connected to the pressing means 122 at the bottom surface 104, terminates at the bottom surface 104 by a rounded portion 154 positioned so as to face the angle α of the sensing element 400. Hence, the rounded portion 154 allows accommodating the sensing element 400 in the attachment member 102 without damaging the flexible film 406 by ensuring that the flexible film 406 cannot be further bent to an angle smaller than the angle α, even during vibration or shock events.

Therefore, the rounded portion 154, in addition to the protrusions 150, 152 of the through-hole 132 are structural elements that allow enhancing the stability and the reliability of the sensing element 400 of the sensing device 100.

The Figure 3 illustrates a sensing device 200 according to a second embodiment of the present invention. The sensing device 200 as illustrated in Figure 3 is represented assembled but not attached to a windshield 20.

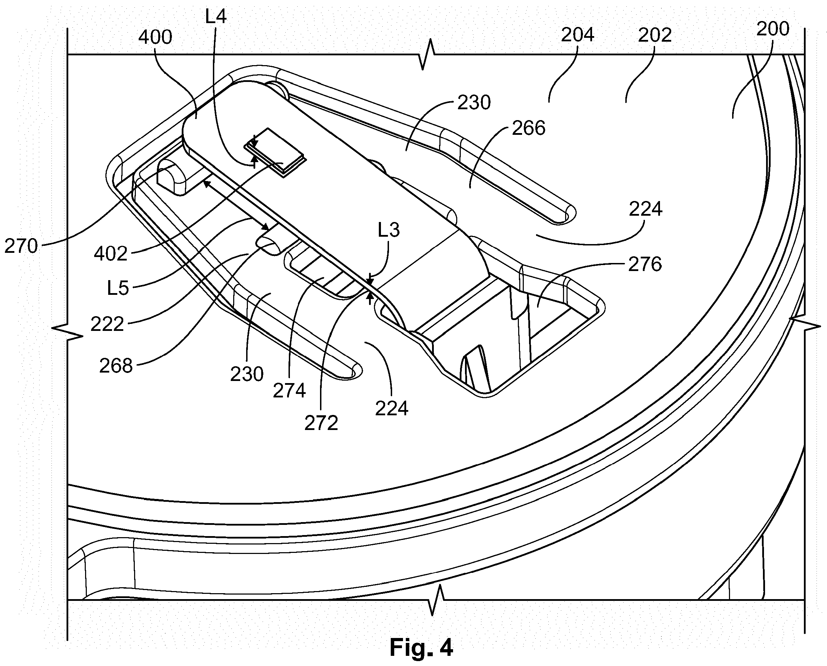

The enlarged view of the Figure 4 shows the area of the sensing device 200 facing the surface 22 of the windshield 20 when the sensing device 200 is attached to the windshield 20.

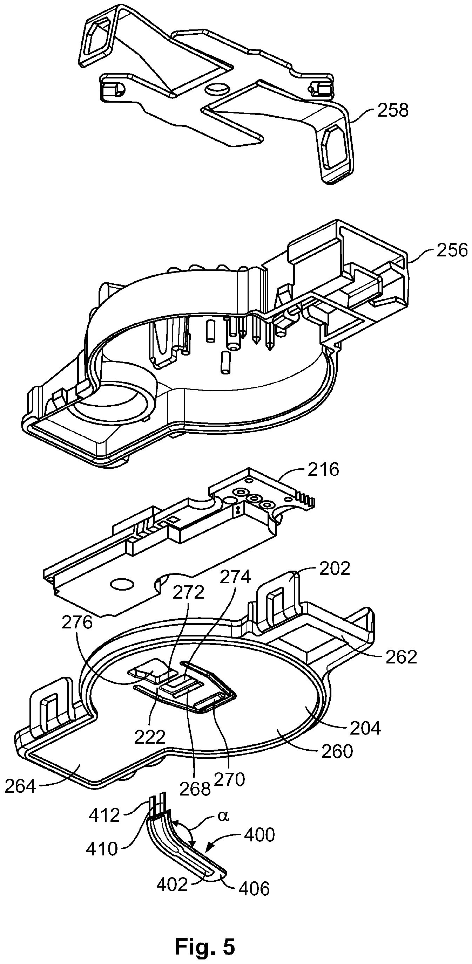

As the Figure 4 represents an enlarged view of the sensing device 200 and the Figure 5 an exploded view of the sensing device 200, the Figures 3, 4 and 5 will be described together in the following.

Elements with the same tens and ones in the reference numeral already described and illustrated in Figures 1 and 2 will not be described in detail again but reference is made to their description above.

As shown in Figure 5, the sensing device 200 comprises an attachment member 202 which serves as an housing for a PCB 216. The attachment member 202 is closed by a housing 256, which is fixed on a retainer 258.

The attachment member 202 according to the second embodiment has a central circular portion 260 from which extends two rectangular portions 262, 264 diametrically opposed.

As represented in the Figure 4, the sensing element 400 comprises the transducer 402 embedded in the flexible film 406. In contrast with the first embodiment wherein the thickness L3 of the flexible film 406 is substantially equivalent to the thickness L4 of the transducer 402, in the second embodiment the thickness L4 of transducer 402 is greater than the thickness L3 of the rest of the flexible film 406.

The pressing means 222 of the sensing device 200 according to the second embodiment is U-shaped such that the extremities 224 of the U-shape are attached to the bottom surface 204 of the attachment member 202. The rest of the U-shaped pressing means 222 is free, *i.e.* not being attached to the attachment member 202. In the second embodiment, the U-shaped pressing means 222 is formed integrally with the rest of the attachment member 202 in a plastic material such as to form a pressing means 222 acting as a spring arm which stay resilient and is stable over the years, in particular in comparison with foam elements as used in the prior art and illustrated in Figures 9a-b.

In comparison with the pressing means 122 of the sensing device 100 according to the first embodiment, the external surface 266 of the central portion 226 of the U-shaped pressing means 222 is provided with two protrusions 268, 270. The protrusions 268, 270 are configured such that when the attachment member 222 is attached to the windshield surface 22, the protrusions 268, 270 extend from the surface 266 towards the windshield surface 22 and applies a pressure on or over the transducer 400, as illustrated in Figure 4.

The protrusions 268, 270 have the shape of half cylinder attached to the surface 266 of the central portion 226 at the flat side of the half cylinder. The protrusions 268, 270 are integrally formed with the pressing means 222. The protrusions 268, 207 are positioned so that their axes are substantially perpendicular to the two members 230, connecting the central portion 226 to the extremities 224. Furthermore, the axes of the protrusions 268 and 270 are parallel and spaced from each other by a distance L5 so that the transducer 402 can be positioned between the protrusions 268, 270 as shown in Figure 3 and 4.

The protrusion 268 is positioned closer to the extremities 224 of the U-shaped pressing means 222 than the protrusion 270. Further, the protrusion 268 is smaller than the protrusion 270. Hence, the protrusion 270, having a height dimension taller than the one of the protrusion 268, allows pushing further the sensing element 400 towards the windshield surface 22. Therefore, the protrusions 268, 270 of the pressing means 222 according to the second embodiment, contribute to improve the quality of the contact between the windshield 20 and the transducer 402 thanks to the enhancement of the pressure applied over the transducer 402 of the flexible film 406.

Furthermore, in comparison with the sensing device 100 according to the first embodiment, the sensing device 200 comprises an elongate junction portion 272 connecting the two members 230 of the U-shaped pressing means 222. According to the second embodiment, the elongate junction portion 272 is formed integrally with the two members 230, the central portion 226, the protrusions 268, 270 and the attachment member 202. The elongate junction portion 272 is positioned perpendicularly to the two members 230 and substantially parallel to the length of the protrusions 268, 270 such as to form a first hole 274 and a second hole 276. The portion of the sensing element 400 provided with the transducer 402 exits through the second hole 276. The elongate junction portion 272, separating the first hole 274 - which is positioned adjacent to the central portion 226, from the second hole 276, allows guiding the sensing element 400. Indeed, the junction portion 272, the protrusion 268 and the protrusion 270 provide to the sensing element 400 a gradual slope between the second hole 276 and the greatest protrusion 270, which allows guiding and thus improving the quality of the contact between the windshield 20 (not represented) and the transducer 402.

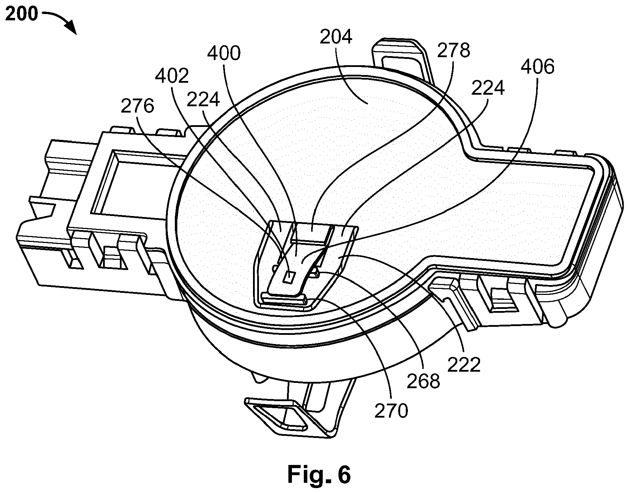

The Figure 6 illustrates a variant of the sensing device 200 according to a second embodiment of the present invention. Elements with the same reference numeral already described and illustrated in Figures 3, 4 and 5 will not be described in detail again but reference is made to their description above.

In the variant of the second embodiment illustrated in Figure 6, the attachment member 222 of the sensing device 200 comprises a flattened tang 278 extending from the bottom surface 204 between the extremities 224 of the pressing means 222 towards the hole 276. Hence, the flattened tang 274 partially covers the hole 276. The flattened tang 278 provides further support to the sensing element 400 and help, in combination with the protrusions 268, 270, maintaining the part of the flexible film 406 comprising the transducer 402 closer to the surface 22 of the windshield 20 than the rest of the flexible film 406 of the sensing element 400. Indeed, holding the flexible film 406 under tension allows increasing the pressure applied on the transducer 402, and thus improves the contact with the windshield surface 22.

According to another variant, the attachment member 222 of sensing device 200 can be provided with the elongate junction portion 272 illustrated in Figures 3, 4 and 5 and the flattened tang 278 illustrated in Figure 6.

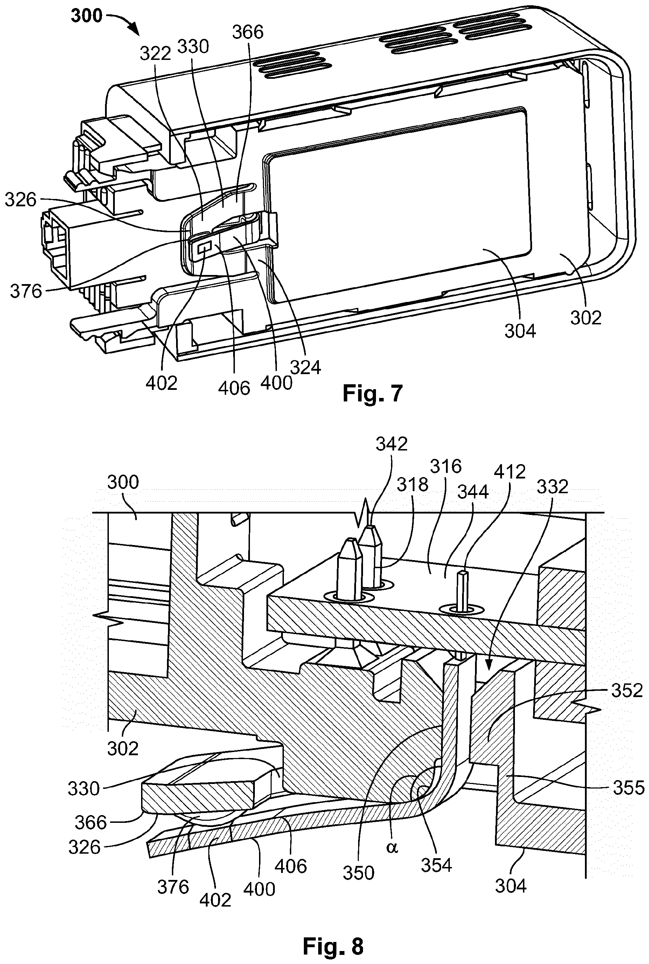

The Figure 7 illustrates a sensing device 300 according to a third embodiment of the present invention. As the Figure 8 illustrates a cross-sectional view of the sensing device 300, the Figure 7 and the Figure 8 will be described together in the following.

Elements with the same tens and ones in the reference numeral already described and illustrated in Figures 1, 2, 3, 4, 5 and 6 will not be described in detail again but reference is made to their description above.

In comparison with the attachment member 202 of the second embodiment, the attachment member 302 according to the third embodiment is substantially rectangular.

The bottom surface 304 of the attachment member 302 comprises a pressing means 322 being U-shaped such that the extremities 324 of the U-shape are attached to the bottom surface 304. The rest of the U-shaped pressing means 322 is free, *i.e.* not being attached to the attachment member 302.

As in the second embodiment, the U-shaped pressing means 322 is formed integrally with the rest of the attachment member 302 in a plastic material such as to form a pressing means 322 acting as a spring arm which stay resilient and is stable over the years, in particular in comparison with foam elements as used in the prior art and illustrated in Figures 9a-b.

In a variant, the extremities 324 of the arms 330 of the U-shaped pressing means 322 may be fixed to the attachment member 302 by means of bonding fixation or fastening elements, such as by means of a spring for example.

In comparison with the second embodiment, the external surface 366 of the central portion 326 of the U-shaped pressing means 322 is provided with one bump 376, instead of two protrusions 268, 270 in the second embodiment. The bump 376 extends out of the external surface 366 such that when the sensing device 300 is attached to a windshield 20, the bump 376 applies a pressure over the transducer 402 of the sensing element 400, hence improving the quality of the contact with the windshield surface 22.

As it can be seen in Figure 8, and as explained with respect to Figure 1 according to the first embodiment, the attachment means 302 comprises a through-hole 332 adapted to receive the sensing element 400 such that the bare wire end 412 of the sensing element 400 extends out of the PCB 316, and can be soldered on the same surface 344 of the PCB 316 than the electrical contact pins 318 at their extremities 342.

As for the first embodiment, the inner walls 334, 335 of the through-hole 332 are provided with protrusions 350, 352 helping guiding and maintaining the sensing element 400, especially under the conditions experienced by a sensing device attached to a motor vehicle windshield.

Furthermore, the sidewall 334 of the through-hole 332 terminates at the bottom surface 304 by a rounded portion 354 positioned so as to face the angle α of the sensing element 400. As illustrated in Figure 8, the curve of the sensing element 400, having an angle α, follows the rounded portion 354.

The bump 376 and the rounded portion 354 of the sensing device 300 allow maintaining the sensing element 400 under tension and thus allow increasing the pressure applies by the pressing means 322 over the transducer 402 of the sensing element 400.

Hence, according to all three embodiments described above, the attachments means 122, 222, 322 permits to enhance the stability and the reliability of the contact between the sensing element 400 and the windshield 20 thanks to the resilience of the pressing means 122, 222, 322 which act as a spring arm being more stable over the time than foams, as used in the prior art. Furthermore, since the transducer 402 is embedded in the flexible film 406, and thus protected, it becomes possible to apply a pressure over the transducer 402, in contrast with the device 1 of the prior art illustrated in Figures 9a-b. Hence, the quality of the contact between the sensing element 400 and the windshield 20 is further improved.

Finally, the protrusions 268, 270 or the bump 376 allows to maintain the transducer 400 closer to surface 22 of the windshield, and thus also permit enhancing the quality of the contact between the sensing element 400 and the windshield 20.

### Reference numbers

- 1:: conventional temperature sensing device according to the prior art
- 10:: thermistor
- 12:: flexible polyimide film
- 14:: end of the polyimide film
- 16:: printed circuit board (PCB)
- 18:: other end of the polyimide film
- 20:: windshield
- 22:: surface of the windshield
- 24, 26:: foam elements
- 28:: portion of the housing
- 30:: housing
- 32:: electrical pin contacts
- 34, 36:: surfaces PCB

- 100:: sensing device according to the first embodiment
- 102:: attachment member
- 104:: bottom surface
- 106:: sidewalls
- 108:: external bottom surface
- 110:: internal bottom surface
- 112:: inside of attachment member
- 114:: outside of attachment member
- 116:: PCB
- 118:: electrical contact pin
- 120:: associated connector
- 122:: pressing means
- 124:: first portion of the pressing means
- 126:: second portion of the pressing means
- 128:: free extremity of the pressing means
- 130:: member of the pressing means
- 132:: through-hole attachment means
- 134, 135:: through-hole sidewalls
- 136:: mounting pad
- 138:: first through-hole PCB
- 140:: second through-hole PCB
- 142:: free extremity electrical contact pin
- 144:: surface PCB
- 146, 148:: inner walls
- 150, 152:: protrusions
- 154:: rounded portion

- 200:: sensing device according to the second embodiment
- 202:: attachment member
- 204:: bottom surface
- 222:: pressing means
- 224:: portion of the pressing means
- 226:: central portion of pressing means
- 230:: members256: housing
- 258:: retainer
- 260:: circular portion
- 262, 264:: rectangular portion
- 266:: external surface of pressing means
- 268, 270:: protrusions
- 272:: elongate junction portion
- 274, 276:: hole
- 278:: flattened tang

- 300:: sensing device according to the third embodiment
- 302:: attachment means
- 304:: bottom surface
- 316:: PCB
- 318:: electrical contact pins
- 322:: pressing means
- 324:: extremities pressing means
- 326:: central portion
- 330:: arm
- 332:: through-hole
- 334, 335:: sidewalls
- 342:: extremities of electrical contact pins
- 344:: PCB surface
- 350, 352:: protrusions
- 354:: rounded portion
- 366:: external surface
- 372:: hollowed portion
- 376:: bump

- 400:: sensing element
- 402:: transducer
- 404:: wires
- 406:: flexible film
- 408:: round corners
- 410:: free extremity
- 412:: bare wire end
- 414:: first portion
- 416:: second portion
- 418, 420:: surface

- α:: angle
- A:: rotation axis
- d1, d2, d3:: distance along Y
- D1:: diameter between the protrusions
- F1, F2:: force
- L1, L2:: distances
- L3:: thickness of the flexible film
- L4:: thickness of the transducer
- L5:: distance between protrusions 168, 170
- X, Y:: direction
- Y1:: axis of the through-hole 132
- Y2:: axis of the through-hole 138
- Y3:: axis of the through-hole

## Claims

1. A sensing device (100, 200, 300) for a windshield (20), comprising:
an attachment member (102, 202, 302) being a first housing of the sensing device (100, 200, 300) and attachable to a surface (22) of said windshield (20);
a sensing element (400) comprising a transducer (402), said transducer (402) being embedded in a flexible film (406); the sensing element (400) comprising a first portion (414) and a second portion (416) comprising the transducer (402);
wherein the sensing element is bent in a manner to form an angle (α), different from a flat angle, between the first portion (414) and the second portion (416); and
wherein the attachment member (102, 202, 302) comprises a pressing means (122, 222, 322), the pressing means (122, 222, 322) being configured to apply a pressure on or over the transducer (402) of the sensing element (400) when the attachment member (102, 202, 302) is attached to the surface (22) of the windshield (20), so as to keep the transducer (402) pressed against the surface (22) of the windshield (20).

2. The sensing device (100, 200, 300) according to claim 1, wherein the pressing means (122, 222, 322) comprises at least one first portion (124, 224, 324) attached to the attachment member (102, 202, 302) and at least one second portion (126, 226, 326) configured to be in contact with the transducer (402) when the attachment member (102, 202, 302) is attached to the surface (22) of the windshield (20), such that when the attachment member (102, 202, 302) of the sensing device (100, 200, 300) is attached to the surface (22) of the windshield (20), the at least one second portion (126, 226, 326) is closer to the surface (22) of the windshield (20) than the at least one first portion (124, 224, 324) according to a direction normal to the windshield surface (22).

3. The sensing device (100, 200, 300) according to claim 1 or 2, wherein the pressing means (122, 222, 322) is tab-shaped, such that a first portion (124, 224, 324) of the tab's length is attached to the attachment member (102, 202, 302), and a second portion (126, 226, 326) of the tab's length terminates in a free extremity (128); such that the pressing means is able to pivot at the first portion around an axis perpendicular to the length of the tab and can act as a spring arm for applying a pressure on or over the transducer (402) when the attachment member (102, 202, 302) is attached to the windshield surface (22).

4. The sensing device (200, 300) according to claim 2 or 3, wherein a surface (266, 366) of the second portion (226, 326) of the pressing means (222, 322) facing towards the windshield surface (22), when the attachment member (202, 302) is attached to the windshield surface (22), is provided with a protrusion (268, 270, 376),
such that when the attachment member (202, 302) is attached to the windshield surface (22), the protrusion (268, 270, 376) extends from the surface (266, 366) of the second portion (226, 326) towards the windshield surface (22) and applies a pressure on or over the transducer (402).

5. The sensing device (200, 300) according to claim 3, wherein the tab of the pressing means (222, 322) comprises a hollowed portion (274, 276, 372) such that the pressing means (222, 322) is U-shaped, V-shaped, arc-shaped or horseshoe-shaped, and
such that at least one free end (124, 324) of the U-shaped, V-shaped, arc-shaped or horseshoe-shaped pressing means (222, 322) is fixed to the attachment member (202, 302), and
the central section (226, 326) of the U-shaped, V-shaped, arc-shaped or horseshoe-shaped pressing means (222, 322) is configured to apply a pressure on or over the transducer (402) when the attachment member (202, 302) is attached to the windshield surface (22).

6. The sensing device (100, 300) according to claim 5, wherein the attachment member (122, 322) comprises at least one through-hole (132, 332) such that the axis (Y1) of the at least one through-hole (132, 332) is normal to the surface (20) of the windshield surface (22) when the attachment member (122, 322) is attached to the windshield surface (22), and
such that the sensing element (400) is configured to be positioned at least partially through the through-hole (132, 332) of the attachment member (102, 302) and at least partially through the hollowed portion (372) of the pressing means (122, 322).

7. The sensing device (100, 200, 300) according to any of the preceding claims, wherein the attachment member (102, 202, 302) is configured for receiving at least one printed circuit board (PCB) (116, 216, 316) and one or more electrical contact pin (140, 340).

8. The sensing device (100, 200, 300) according to claim 7, wherein the at least one printed circuit board (PCB) (116, 216, 316) comprises at least one through-hole (340) whereof the axis (Y3) merges with the axis (Y1) of the at least one through-hole (132, 332) of the attachment member (102, 202, 302) when the PCB (116, 216, 316) is received by the attachment member (102, 202, 302).

9. The sensing device (100, 200, 300) according to claims 6 and 7, wherein the sensing element (400) is configured to be positioned at least partially through the through-hole (132, 332) of the attachment member (102, 202, 302) and through the through-hole (140) of the PCB (116, 216, 316), such that one extremity (412) of the sensing element (400) extends out of the PCB (116, 216, 316) when the sensing device (100, 200, 300) is assembled.

10. The sensing device (100, 200, 300) according to claim 9, wherein one extremity (142) of the one or more electrical contact pin (118) and the one extremity (412) of the sensing element (400) extending out of the PCB (116, 216, 316) when the sensing device (100, 200, 300) is assembled, extend in the same direction from the through-hole (132, 332, 140) of the PCB (116, 216, 316).

11. The sensing device (100, 200, 300) according to any of the preceding claims, wherein the pressing means (122, 222, 322) is integrally formed with the attachment member (102, 202, 302) such that the pressing means (122, 222, 322) and the attachment member (102, 202, 302) are one-piece.

12. The sensing device (100, 200, 300) according to any of the preceding claims, wherein the sensing element (400) is one of a temperature sensor, a humidity sensor, an optical sensor, a pressure sensor and a sound sensor.

13. The sensing device (100, 200, 300) according to any of the preceding claims, wherein the sensing element (400) is a Negative Temperature Coefficient (NTC) thermistor (402) embedded in a flexible polyimide film (406).

14. Method for attaching a sensing device on a windshield surface, the sensing device (100, 200, 300) comprising:
an attachment member (102, 202, 302) being a first housing of the sensing device (100, 200, 300) and comprising a pressing means (122, 222, 322); wherein the attachment member (102, 202, 302) is able to receive at least one Printed Circuit Board (PCB) (116, 216, 316) and at least one electrical contact pin (118) and
a sensing element (400) comprising a transducer (402), said transducer being embedded in a flexible film (406);
wherein the method comprises the step of:
a) Assembling the at least one electrical contact pin (118) to the attachment member (102, 202, 302);
b) Accommodating the PCB (116, 216, 316) in the attachment member (102, 202, 302) such that one extremity (142) of the at least one electrical contact pin (118) extends out of a corresponding hole (140) of the PCB (116, 216, 316);
c) Bending the sensing element (400) in a manner to form an angle (α), different from a flat angle, between a first portion (414) of the sensing element (400) and a second portion (416) of the sensing element (400), the second portion (416) comprising the transducer (402);
d) Inserting the first portion (414) of the sensing element (400) through a through-hole (132, 332) of the attachment member (102, 202, 302) and through a corresponding hole (138) of the PCB (116, 216, 316), such that one extremity (412) of the first portion (414) extends out of the PCB's hole (138) in the same direction as the one extremity (142) of the at least one electrical contact pin (118),
and positioning the second portion (416) of the sensing element (400) such that the transducer (402) is placed on, over or under the pressing means (122, 222, 322);
e) Welding the one extremity (412) of the first portion (414) of the sensing element (400) and the extremity (142) of the at least one electrical contact pin (118) to the PCB (116, 216, 316);
f) Assembling the attachment member (102, 202, 302) to the housing of the sensing device (100, 200, 300);
g) Attaching the sensing device (100, 200, 300) to the windshield surface (22) by means of the attachment member (102, 202, 302) such that the transducer (402) of the sensing means (400) is kept pressed against the windshield surface (22) under the pressure applied by the pressing means (122, 222, 322).

15. The method for attaching a sensing device on a windshield surface according to claim 14, , the method further comprising the operations of:
e1) soldering one extremity (412) of the sensing element (400) to the PCB (116, 216, 316); and
e2) soldering the at least one electrical contact pin (118) to the PCB (116, 216, 316);
such that the operations e1) and e2) are realized at the same step.

16. The method for attaching a sensing device on a windshield surface according to claim 14 or 15, wherein the sensing device (100, 200, 300) is the sensing device according to one of the claims 1 to 13.

## Patentansprüche

1. Erfassungsvorrichtung (100, 200, 300) für eine Windschutzscheibe (20), die umfasst:
ein Anbringungsteil (102, 202, 302), das ein erstes Gehäuse der Erfassungsvorrichtung (100, 200, 300) ist und an einer Fläche (22) der Windschutzscheibe (20) angebracht werden kann;
ein Erfassungselement (400), das einen Wandler (402) umfasst, wobei der Wandler (402) in eine flexible Folie (406) eingebettet ist und das Erfassungselement (400) einen ersten Abschnitt (414) sowie einen zweiten Abschnitt (416) umfasst, der den Wandler (402) umfasst;
wobei das Erfassungselement so gebogen ist, dass ein Winkel (α), der sich von einem flachen Winkel unterscheidet, zwischen dem ersten Abschnitt (414) und dem zweiten Abschnitt (416) gebildet wird; und
wobei das Anbringungsteil (102, 202, 302) eine Drückeinrichtung (122, 222, 322) umfasst und die Drückeinrichtung (122, 222, 322) so ausgeführt ist, dass sie einen Druck auf oder über den Wandler (402) des Erfassungselementes (400) ausübt, wenn das Anbringungsteil (102, 202, 302) an der Fläche (22) der Windschutzscheibe (20) angebracht ist, um den Wandler (402) an die Fläche (22) der Windschutzscheibe (20) gedrückt zu halten.

2. Erfassungsvorrichtung (100, 200, 300) nach Anspruch 1, wobei die Drückeinrichtung (122, 222, 322) wenigstens einen an dem Anbringungsteil (102, 202, 302) angebrachten ersten Abschnitt (124, 224, 324) sowie wenigstens einen zweiten Abschnitt (126, 226, 326) umfasst, der so ausgeführt ist, dass er in Kontakt mit dem Wandler (402) ist, wenn das Anbringungsteil (102, 202, 302) an der Fläche (22) der Windschutzscheibe (20) angebracht ist, so dass wenn das Anbringungsteil (102, 202, 302) der Erfassungsvorrichtung (100, 200, 300) an der Fläche (22) der Windschutzscheibe (20) angebracht ist, sich der wenigstens eine zweite Abschnitt (126, 226, 326) in einer Richtung senkrecht zu der Windschutzscheiben-Fläche (22) näher an der Fläche (22) der Windschutzscheibe (20) befindet als der wenigstens eine erste Abschnitt (124, 224, 324).

3. Erfassungsvorrichtung (100, 200, 300) nach Anspruch 1 oder 2, wobei die Drückeinrichtung (122, 222, 322) in Form einer Lasche so ausgebildet ist, dass ein erster Abschnitt (124, 224, 324) der Länge der Lasche an dem Anbringungsteil (102, 202, 302) angebracht ist und ein zweiter Abschnitt (126, 226, 326) der Länge der Lasche mit einem freien äußeren Ende (128) abschließt, so dass die Drückeinrichtung an dem ersten Abschnitt um eine Achse senkrecht zu der Länge der Lasche geschwenkt werden und als ein Federarm wirken kann, mit dem ein Druck auf oder über den Wandler (402) ausgeübt wird, wenn das Anbringungsteil (102, 202, 302) an der Windschutzscheiben-Fläche (22) angebracht ist.

4. Erfassungsvorrichtung (200, 300) nach Anspruch 2 oder 3, wobei eine Fläche (266, 366) des zweiten Abschnitts (226, 326) der Drückeinrichtung (222, 322), die der Windschutzscheiben-Fläche (22) zugewandt ist, wenn das Anbringungsteil (202, 302) an der Windschutzscheiben-Fläche (22) angebracht ist, mit einem Vorsprung (268, 270, 376) versehen ist,
so dass, wenn das Anbringungsteil (202, 302) an der Windschutzscheiben-Fläche (22) angebracht ist, sich der Vorsprung (268, 270, 376) von der Fläche (266, 366) des zweiten Abschnitts (226, 326) in Richtung der Windschutzscheiben-Fläche (22) erstreckt und einen Druck auf oder über den Wandler (402) ausübt.

5. Erfassungsvorrichtung (200, 300) nach Anspruch 3, wobei die Lasche der Drückeinrichtung (222, 322) einen ausgehöhlten Abschnitt (274, 276, 372) umfasst, so dass die Drückeinrichtung (222, 322) U-förmig, V-förmig, bogenförmig oder hufeisenförmig ist, und
so dass wenigstens ein freies Ende (124, 324) der U-förmigen, V-förmigen, bogenförmigen oder hufeisenförmigen Drückeinrichtung (222, 322) an dem Anbringungsteil (202, 302) befestigt ist, und
der Mittelabschnitt (226, 326) der U-förmigen, V-förmigen, bogenförmigen oder hufeisenförmigen Drückeinrichtung (222, 322) so ausgeführt ist, dass er einen Druck auf oder über den Wandler (402) ausübt, wenn das Anbringungsteil (202, 302) an der Windschutzscheiben-Fläche (22) angebracht ist.

6. Erfassungsvorrichtung (100, 300) nach Anspruch 5, wobei das Anbringungsteil (122, 322) wenigstens ein Durchgangsloch (132, 332) umfasst und die Achse (Y1) des wenigstens einen Durchgangslochs (132, 332) senkrecht zu der Oberfläche (20) der Windschutzscheiben-Fläche (22) verläuft, wenn das Anbringungsteil (122, 322) an der Windschutzscheiben-Fläche (22) angebracht ist, und
das Erfassungselement (400) so ausgeführt ist, dass es wenigstens teilweise durch das Durchgangsloch (132, 332) des Anbringungsteils (102, 302) hindurch und wenigstens teilweise durch den ausgehöhlten Abschnitt (372) der Drückeinrichtung (122, 322) hindurch positioniert wird.

7. Erfassungsvorrichtung (100, 200, 300) nach einem der vorangehenden Ansprüche, wobei das Anbringungsteil (102, 202, 302) so ausgeführt ist, dass es wenigstens eine Leiterplatte (PCB) (116, 216, 316) und einen oder mehrere elektrische Kontaktstift/e (140, 340) aufnimmt.

8. Erfassungsvorrichtung (100, 200, 300) nach Anspruch 7, wobei die wenigstens eine Leiterplatte (PCB) (116, 216, 316) wenigstens ein Durchgangsloch (340) umfasst, dessen Achse (Y3) sich mit der Achse (Y1) des wenigstens einen Durchgangslochs (132, 332) des Anbringungsteils (102, 202, 302) vereinigt, wenn die Leiterplatte (116, 216, 316) von dem Anbringungsteil (102, 202, 302) aufgenommen wird.

9. Erfassungsvorrichtung (100, 200, 300) nach den Ansprüchen 6 und 7, wobei das Erfassungselement (400) so ausgeführt ist, dass es wenigstens teilweise durch das Durchgangsloch (132, 332) des Anbringungsteils (102, 202, 302) und durch das Durchgangsloch (140) der Leiterplatte (116, 216, 316) hindurch so positioniert wird, dass ein äußeres Ende (412) des Erfassungselementes (400) von der Leiterplatte (116, 216, 316) herausragt, wenn die Erfassungsvorrichtung (100, 200, 300) zusammengebaut ist.

10. Erfassungsvorrichtung (100, 200, 300) nach Anspruch 9, wobei sich ein äußeres Ende (142) des einen oder der mehreren elektrischen Kontaktstiftes/Kontaktstifte (118) und das eine äußere Ende (412) des Erfassungselementes (400), das von der Leiterplatte (116, 216, 316) herausragt, wenn die Erfassungsvorrichtung (100, 200, 300) zusammengebaut ist, in der gleichen Richtung aus dem Durchgangsloch (132, 332, 140) der Leiterplatte (116, 216, 316) herausragen.

11. Erfassungsvorrichtung (100, 200, 300) nach einem der vorangehenden Ansprüche, wobei die Drückeinrichtung (122, 222, 322) integral so mit dem Anbringungsteil (102, 202, 302) ausgebildet ist, dass die Drückeinrichtung (122, 222, 322) und das Anbringungsteil (102, 202, 302) aus einem Teil bestehen.

12. Erfassungsvorrichtung (100, 200, 300) nach einem der vorangehenden Ansprüche, wobei das Erfassungselement (400) ein Temperatursensor, ein Feuchtigkeitssensor, ein optischer Sensor, ein Drucksensor oder ein Schallsensor ist.

13. Erfassungsvorrichtung (100, 200, 300) nach einem der vorangehenden Ansprüche, wobei das Erfassungselement (400) ein NTC-Thermistor (402) ist, der in eine flexible PolyimidFolie (406) eingebettet ist.

14. Verfahren zum Anbringen einer Erfassungsvorrichtung an einer Windschutzscheiben-Fläche, wobei die Erfassungsvorrichtung (100, 200, 300) umfasst:
ein Anbringungsteil (102, 202, 302), das ein erstes Gehäuse der Erfassungsvorrichtung (100, 200, 300) ist und eine Drückeinrichtung (122, 222, 322) umfasst, wobei das Anbringungsteil (102, 202, 302) in der Lage ist, wenigstens eine Leiterplatte (PCB) (116, 216, 316) sowie wenigstens einen elektrischen Kontaktstift (118) aufzunehmen, und
ein Erfassungselement (400), das einen Wandler (402) umfasst, wobei der Wandler in eine flexible Folie (406) eingebettet ist;
wobei das Verfahren die folgenden Schritte umfasst:
a) Montieren des wenigstens einen elektrischen Kontaktstiftes (118) an dem Anbringungsteil (102, 202, 302);
b) Aufnehmen der Leiterplatte (116, 216, 316) in dem Anbringungsteil (102, 202, 302), so dass ein äußeres Ende (142) des wenigstens einen elektrischen Kontaktstiftes (118) aus einem entsprechenden Loch (140) der Leiterplatte (116, 216, 316) herausragt;
c) Biegen des Erfassungselementes (400), so dass ein Winkel (α), der sich von einem flachen Winkel unterscheidet, zwischen einem ersten Abschnitt (414) des Erfassungselementes (400) und einem zweiten Abschnitt (416) des Erfassungselementes (400) gebildet wird, wobei der zweite Abschnitt (416) den Wandler (402) umfasst;
d) Einführen des ersten Abschnitts (414) des Erfassungselementes (400) durch ein Durchgangsloch (132, 332) des Anbringungsteils (102, 202, 302) und durch ein entsprechendes Loch (138) der Leiterplatte (116, 216, 316) hindurch, so dass ein äußeres Ende (412) des ersten Abschnitts (414) aus dem Loch (138) der Leiterplatte in der gleichen Richtung herausragt wie das eine äußere Ende (142) des wenigstens einen elektrischen Kontaktstiftes (118),
und Positionieren des zweiten Abschnitts (416) des Erfassungselementes (400), so dass der Wandler (402) auf, über oder unter der Druckeinrichtung (122, 222, 322) angeordnet wird;
e) Anschweißen des einen äußeren Endes (412) des ersten Abschnitts (414) des Erfassungselementes (400) und des äußeren Endes (142) des wenigstens einen elektrischen Kontaktstiftes (118) an der Leiterplatte (116, 216, 316);
f) Montieren des Anbringungsteils (102, 202, 302) an dem Gehäuse der Erfassungsvorrichtung (100, 200, 300);
g) Anbringen der Erfassungsvorrichtung (100, 200, 300) an der Windschutzscheiben-Fläche (22) mittels des Anbringungsteils (102, 202, 302), so dass der Wandler (402) der Erfassungseinrichtung (400) unter dem durch die Drückeinrichtung (122, 222, 322) ausgeübten Druck an die Windschutzscheiben-Fläche (22) gedrückt gehalten wird.

15. Verfahren zum Anbringen einer Erfassungsvorrichtung an einer Windschutzscheiben-Fläche nach Anspruch 14, wobei das Verfahren des Weiteren die folgenden Vorgänge umfasst:
e1) Anlöten eines äußeren Endes (412) des Erfassungselementes (400) an der Leiterplatte (116, 216, 316); und
e2) Anlöten des wenigstens einen elektrischen Kontaktstiftes (118) an der Leiterplatte (116, 216, 316);
auf eine Weise, dass die Vorgänge e1) und e2) in ein und demselben Schritt durchgeführt werden.

16. Verfahren zum Anbringen einer Erfassungsvorrichtung an einer Windschutzscheiben-Fläche nach Anspruch 14 oder 15, wobei die Erfassungsvorrichtung (100, 200, 300) die Erfassungsvorrichtung nach einem der Ansprüche 1 bis 13 ist.

## Revendications

1. Dispositif de détection (100, 200, 300) pour un pare-brise (20), comprenant: un élément de fixation (102, 202, 302) étant un premier logement du dispositif de détection (100, 200, 300) et pouvant être fixé à une surface (22) dudit pare-brise (20);
un élément de détection (400) comprenant un transducteur (402), ledit transducteur (402) étant noyé dans un film flexible (406);
l'élément de détection (400) comprenant une première partie (414) et une seconde partie (416) comprenant le transducteur (402);
dans lequel l'élément de détection est plié de manière à former un angle (α), différent d'un angle plat, entre la première partie (414) et la seconde partie (416) ; et
dans lequel l'élément de fixation (102, 202, 302) comprend un moyen de pression (122, 222, 322), le moyen de pression (122, 222, 322) étant configuré pour appliquer une pression sur ou au-dessus du transducteur (402) de l'élément de détection (400) lorsque l'élément de fixation (102, 202, 302) est fixé à la surface (22) du pare-brise (20), de manière à maintenir le transducteur (402) pressé contre la surface (22) du pare-brise (20).

2. Dispositif de détection (100, 200, 300) selon la revendication 1, dans lequel le moyen de pression (122, 222, 322) comprend au moins une première partie (124, 224, 324) fixée à l'élément de fixation (102, 202, 302) et au moins une seconde partie (126, 226, 326) configurée pour être en contact avec le transducteur (402) lorsque l'élément de fixation (102, 202, 302) est fixé à la surface (22) du pare-brise (20), de sorte que lorsque l'élément de fixation (102, 202, 302) du dispositif de détection (100, 200, 300) est fixé à la surface (22) du pare-brise (20), ladite au moins une seconde partie (126, 226, 326) est plus proche de la surface (22) du pare-brise (20) que ladite au moins une première partie (124, 224, 324) selon une direction normale à la surface du pare-brise (22).

3. Dispositif de détection (100, 200, 300) selon les revendications 1 ou 2, dans lequel le moyen de pression (122, 222, 322) est en forme de languette, de sorte qu'une première partie (124, 224, 324) de la longueur de la languette est fixée à l'élément de fixation (102, 202, 302), et une seconde partie (126, 226, 326) de la longueur de la languette se termine par une extrémité libre (128); de sorte que le moyen de pression est capable de pivoter au niveau de la première partie autour d'un axe perpendiculaire à la longueur de la patte et peut agir comme un bras de ressort pour appliquer une pression sur ou au-dessus du transducteur (402) lorsque l'élément de fixation (102, 202, 302) est fixé à la surface du pare-brise (22).

4. Dispositif de détection (200, 300) selon les revendications 2 ou 3, dans lequel une surface (266, 366) de la seconde partie (226, 326) du moyen de pression (222, 322) tournée vers la surface du pare-brise (22), lorsque l'élément de fixation (202, 302) est fixé à la surface du pare-brise (22), est pourvue d'une saillie (268, 270, 376),
de sorte que lorsque l'élément de fixation (202, 302) est fixé à la surface du pare-brise (22), la saillie (268, 270, 376) s'étend de la surface (266, 366) de la seconde partie (226, 326) vers la surface du pare-brise (22) et applique une pression sur ou au-dessus du transducteur (402).

5. Dispositif de détection (200, 300) selon la revendication 3, dans lequel la languette du moyen de pression (222, 322) comprend une partie creuse (274, 276, 372) de sorte que le moyen de pression (222, 322) est en forme de U, de V, d'arc ou de fer à cheval, et
de telle sorte qu'au moins une extrémité libre (124, 324) du moyen de pression en forme de U, de V, d'arc ou de fer à cheval (222, 322) est fixée à l'élément de fixation (202, 302), et
la section centrale (226, 326) du moyen de pression en forme de U, de V, d'arc ou de fer à cheval (222, 322) est configurée pour appliquer une pression sur ou au-dessus du transducteur (402) lorsque l'élément de fixation (202, 302) est fixé à la surface du pare-brise (22).

6. Dispositif de détection (100, 300) selon la revendication 5, dans lequel l'élément de fixation (122, 322) comprend au moins un trou traversant (132, 332) de telle sorte que l'axe (Y1) dudit au moins un trou traversant (132, 332) est normal à la surface (20) de la surface du pare-brise (22) lorsque l'élément de fixation (122, 322) est fixé à la surface du pare-brise (22), et
de sorte que l'élément de détection (400) est configuré pour être positionné au moins partiellement à travers le trou traversant (132, 332) de l'élément de fixation (102, 302) et au moins partiellement à travers la partie creuse (372) du moyen de pression (122, 322).

7. Dispositif de détection (100, 200, 300) selon l'une quelconque des revendications précédentes, dans lequel l'élément de fixation (102, 202, 302) est configuré pour recevoir au moins une carte de circuit imprimé (PCB) (116, 216, 316) et une ou plusieurs broches de contact électrique (140, 340).

8. Dispositif de détection (100, 200, 300) selon la revendication 7, dans lequel ladite au moins une carte de circuit imprimé (PCB) (116, 216, 316) comprend au moins un trou traversant (340) dont l'axe (Y3) fusionne avec l'axe (Y1) dudit au moins un trou traversant (132, 332) de l'élément de fixation (102, 202, 302) lorsque la PCB (116, 216, 316) est reçue par l'élément de fixation (102, 202, 302).

9. Dispositif de détection (100, 200, 300) selon les revendications 6 et 7, dans lequel l'élément de détection (400) est configuré pour se positionner au moins partiellement à travers le trou traversant (132, 332) de l'élément de fixation (102, 202, 302) et à travers le trou traversant (140) de la carte de circuit imprimé (116, 216, 316), de sorte qu'une extrémité (412) de l'élément de détection (400) s'étende hors de la carte de circuit imprimé (116, 216, 316) lorsque le dispositif de détection (100, 200, 300) est assemblé.

10. Dispositif de détection (100, 200, 300) selon la revendication 9, dans lequel une extrémité (142) de la ou des broches de contact électrique (118) et l'extrémité (412) de l'élément de détection (400) s'étendant hors de la carte de circuit imprimé (116, 216, 316) lorsque le dispositif de détection (100, 200, 300) est assemblé, s'étendent dans la même direction depuis le trou traversant (132, 332, 140) de la carte de circuit imprimé (116, 216, 316).

11. Dispositif de détection (100, 200, 300) selon l'une quelconque des revendications précédentes, dans lequel le moyen de pression (122, 222, 322) est formé d'un seul tenant avec l'élément de fixation (102, 202, 302) de sorte que le moyen de pression (122, 222, 322) et l'élément de fixation (102, 202, 302) sont d'une seule pièce.

12. Dispositif de détection (100, 200, 300) selon l'une quelconque des revendications précédentes, dans lequel l'élément de détection (400) est l'un parmi un capteur de température, un capteur d'humidité, un capteur optique, un capteur de pression et un capteur sonore.

13. Dispositif de détection (100, 200, 300) selon l'une quelconque des revendications précédentes, dans lequel l'élément de détection (400) est une thermistance (402) à coefficient de température négatif (NTC) noyée dans un film polyimide souple (406).

14. Procédé de fixation d'un dispositif de détection sur une surface de pare-brise, le dispositif de détection (100, 200, 300) comprenant :
un élément de fixation (102, 202, 302) étant un premier logement du dispositif de détection (100, 200, 300) et comprenant un moyen de pression (122, 222, 322);
dans lequel l'élément de fixation (102, 202, 302) est capable de recevoir au moins une carte de circuit imprimé (PCB) (116, 216, 316) et au moins une broche de contact électrique (118) et un élément de détection (400) comprenant un transducteur (402), ledit transducteur étant intégré dans un film flexible (406);
dans lequel le procédé comprend l'étape consistant à :
a) assembler ladite au moins une broche de contact électrique (118) à l'élément de fixation (102, 202, 302);
b) loger la carte de circuit imprimé (116, 216, 316) dans l'élément de fixation (102, 202, 302) de sorte qu'une extrémité (142) de ladite au moins une broche de contact électrique (118) s'étende hors d'un trou correspondant (140) de la carte de circuit imprimé (116, 216, 316);
c) plier l'élément de détection (400) de manière à former un angle (α), différent d'un angle plat, entre une première partie (414) de l'élément de détection (400) et une seconde partie (416) de l'élément de détection (400), la seconde partie (416) comprenant le transducteur (402);
d) insérer la première partie (414) de l'élément de détection (400) à travers un trou traversant (132, 332) de l'élément de fixation (102, 202, 302) et à travers un trou correspondant (138) de la carte de circuit imprimé (116, 216, 316), de sorte qu'une extrémité (412) de la première partie (414) s'étende hors du trou (138) de la carte de circuit imprimé dans la même direction que l'extrémité (142) de ladite au moins une broche de contact électrique (118),
et disposer la seconde partie (416) de l'élément de détection (400) de telle sorte que le transducteur (402) soit placé sur, au-dessus ou au-dessous des moyens de pression (122, 222, 322);
e) souder la première extrémité (412) de la première partie (414) de l'élément de détection (400) et l'extrémité (142) de ladite au moins une broche de contact électrique (118) à la carte de circuit imprimé (116, 216, 316);
f) assembler l'élément de fixation (102, 202, 302) au boîtier du dispositif de détection (100, 200, 300);
g) fixer le dispositif de détection (100, 200, 300) à la surface du pare-brise (22) au moyen de l'élément de fixation (102, 202, 302) de telle sorte que le transducteur (402) du moyen de détection (400) soit maintenu pressé contre la surface du pare-brise (22) sous la pression appliquée par le moyen de pression (122, 222, 322).

15. Procédé de fixation d'un dispositif de détection sur une surface de pare-brise selon la revendication 14, le procédé comprenant en outre les opérations suivantes :
e1) souder une extrémité (412) de l'élément de détection (400) au PCB (116, 216, 316); et
e2) souder ladite au moins une broche de contact électrique (118) à la carte de circuit imprimé (116, 216, 316);
de sorte que les opérations e1) et e2) sont réalisées à la même étape.

16. Procédé de fixation d'un dispositif de détection sur une surface de pare-brise selon les revendications 14 ou 15, dans lequel le dispositif de détection (100, 200, 300) est le dispositif de détection selon l'une des revendications 1 à 13.
